# EUROPÄISCHE PATENTSCHRIFT

(11) **EP 3 786 362 B1**
(45) Veröffentlichungstag und Bekanntmachung des Hinweises auf die Patenterteilung: **23.08.2023**
(21) Anmeldenummer: 20190291.3
(22) Anmeldetag: 10.08.2020
(51) Int. Cl.: E01F 8/02, A01G 9/02

(54) **BEGRÜNBARES WANDELEMENT, BAUSATZ ZUR MONTAGE EINES BEGRÜNBAREN WANDELEMENTS SOWIE VERFAHREN ZUR MONTAGE EINES BEGRÜNBAREN WANDELEMENTS**
PLANTABLE WALL ELEMENT, KIT FOR MOUNTING A PLANTABLE WALL ELEMENT AND METHOD FOR MOUNTING A PLANTABLE WALL ELEMENT
ÉLÉMENT MURAL POUVANT ÊTRE VÉGÉTALISÉ, ENSEMBLE DE MONTAGE D'UN ÉLÉMENT MURAL POUVANT ÊTRE VÉGÉTALISÉ AINSI QUE PROCÉDÉ DE MONTAGE D'UN ÉLÉMENT MURAL POUVANT ÊTRE VÉGÉTALISÉ

(30) Priorität: 30.08.2019 DE 102019123341
(43) Veröffentlichungstag der Anmeldung: 03.03.2021
(73) Patentinhaber: Wegenast, Klaus, 79102 Freiburg (DE)
(72) Erfinder: Wegenast, Klaus, 79102 Freiburg (DE)
(74) Vertreter: Mertzlufft-Paufler, Cornelius

(56) Entgegenhaltungen:
- EP-A1- 3 225 739
- CH-A5- 662 845
- DE-A1- 3 110 781
- DE-U1- 9 412 236

## Beschreibung

Die Erfindung betrifft ein begrünbares Wandelement, das zumindest an einer Sichtseite des Wandelements aus miteinander verbundenen Profilstababschnitten montiert ist, und wenigstens ein Wandteil aufweist, das an mindestens einem der Profilstababschnitte gehalten ist und zumindest eine das Wandbauteil durchsetzende Pflanzöffnung hat.

Die Erfindung befasst sich auch mit einem Verfahren zur Montage eines begrünbaren Wandelements der eingangs erwähnten Art an einer Mauer.

Schließlich handelt die Erfindung auch von einem Bausatz zur Montage eines begrünbaren Wandelements, der miteinander verbindbare Profilstababschnitte aufweist, der wenigstens ein Wandbauteil mit mindestens einer das Wandbauteil durchsetzenden Pflanzöffnung hat, welches Wandbauteil an mindestens einem der Profilstababschnitte montierbar ist, und der mindestens ein Befestigungselement aufweist.

Aus der DE 31 10 781 A1 kennt man bereits ein begrünbares Wandelement der eingangs erwähnten Art, das zumindest an einer Sichtseite und vorzugsweise an gegenüberliegenden Sichtseiten aus miteinander verbundenen Profilstababschnitten montiert ist. Das vorbekannte begrünbare Wandelement bildet einen gerüstartigen Aufbau, der zur Erstellung von bepflanzbaren Erdwällen, Schallschutzwänden, Dämmen oder dergleichen verwendet werden kann und der dabei eine Einfassung für das Erdreich bildet. In den von den Profilstababschnitten umgrenzten freien Flächen des vorbekannten Wandelements sind vorzugsweise Drahtgeflechte eingesetzt, die als Wandbauteile dienen und durch die im Erdreich wurzelnde Pflanzen hindurchwachsen können. Diese Profilstababschnitte weisen wenigstens je einen U-förmigen Profilabschnitt auf, deren offene Seiten gegeneinander gerichtet sind zur Bildung einer Einschubführung für das Drahtgeflecht. Das Drahtgeflecht wird dadurch an seinen Randbereichen festgehalten, wobei außerdem durch in gewissen Abständen aufeinanderfolgende Vertikalstege ein Durchbiegen der Drahtgeflechte nach außen hin verhindert wird. An den Bodenteil der U-förmigen Profilstababschnitte schließt sich einseitig ein Schenkel als Anschraubflansch für die eben erwähnten Vertikalstege an. Die Profilstababschnitte weisen ferner an der dem U-förmigen Profilabschnitt abgewandten Begrenzung zwei seitliche Schenkel mit gegeneinander nach innen gerichteten Nasen auf. Auf die seitlichen Schenkel und die Nasen der Profilstababschnitte können Profilteile mit korrespondierenden Abschnitten aufgeschoben werden, so dass diese Profilteile mit den Profilstababschnitten formschlüssig verbunden werden. Da die Bestandteile des vorbekannten Wandelements vergleichsweise komplex aufgebaut sind und da sich die Bestandteile des vorbekannten Wandelements nur mit einem erhöhten Aufwand miteinander verbinden lassen, besteht auch weiterhin die Aufgabe, ein vielseitig einsetzbares Wandelement der eingangs erwähnten Art zu schaffen, dessen Montage erleichtert ist.

Aus der EP 3 225 739 A1 kennt man bereits ein Wandelement, das ein Gestell hat, dessen voneinander beabstandeten Längsseiten jeweils aus zumindest zwei Ständern gebildet sind. Diese Ständer sind jeweils aus wenigstens einem Profilstababschnitt hergestellt, wobei zwischen benachbarten Ständern wenigstens eine wasser- und verrottungsbeständige und als flächiges und insbesondere plattenförmiges Wandbauteil dienende Wärmedämmstoffplatte vorgesehen ist, die beidseits an einem außenliegenden Profilsteg der benachbarten Profilstababschnitte anliegt. In dem Gestellhohlraum des Gestells ist ein sandiges, erdiges, torfiges oder mineralische Pflanzsubstrat eingefüllt. Das vorbekannte Wandelement ist als begrüntes Wandelement ausgebildet, wobei dazu in mindestens einer der Wärmedämmstoffplatten Pflanzlöcher vorgesehen sind, durch welche Pflanzlöcher die im Pflanzsubstrat verwurzelte Vegetation über die Wärmedämmstoffplatte nach außen vorsteht.

Aus der WO 2016/142283 A1 ist bereits ein begrünbares Wandelement vorbekannt, das eine vertikale Vorderwand und eine ebenfalls vertikale Hinterwand aufweist, die mit ihren seitlichen Kanten beidseits an vertikalen Pfosten derart gehalten sind, dass ein bodenseitig und oberseitig offener Hohlraum definiert wird, in welchem Hohlraum ein Pflanzsubstrat vorgesehen ist. Die vertikale Vorderwand des vorbekannten Wandelements weist ein Blech auf, das eine Vielzahl taschenförmiger und nach oben hin offener Vorsprünge hat, die flachseitig aus der blechernen Vorderwand vorstehen. Die in horizontalen Reihen angeordneten Vorsprünge sind derart um eine halbe Periode verschoben, dass die taschenförmigen Vorsprünge von oben her zugänglich sind und jede Reihe von Vorsprüngen wie eine im horizontalen Querschnitt dreieckige oder viereckige Welle gebildet ist. Da in den Wellentälern der jeweils eine Reihe bildenden Vorsprünge keine Bepflanzung möglich ist und da in den Vorsprüngen die im Pflanzsubstrat wurzelnden Pflanzen hindurchwachsen können, kann das vorbekannte Wandelement den Eindruck eines lückenhaften Bewuchses vermitteln. Da die übereinander angeordneten Reihen von Vorsprüngen jeweils eine Welle bilden, da die in den einander benachbarten Reihen angeordneten Vorsprünge um eine halbe Periode versetzt zueinander angeordnet sind und da die Reihen einander nur in einem kleinen Teilbereich ihrer schmalseitigen Ränder führen, ist die Stabilität des die Vorderwand bildenden Bleches begrenzt und nur schwer berechenbar.

Es besteht die Aufgabe, ein Wandelement der eingangs erwähnten Art zu schaffen, das vielseitig einsetzbar ist und die Montage eines solchen begrünbaren Wandelementes erleichtern kann.

Die erfindungsgemäße Lösung dieser Aufgabe besteht bei dem Wandelement der eingangs erwähnten Art darin, dass mindestens einer der Profilstababschnitte an zwei seiner Profilstablängsseiten jeweils eine, zur Aufnahme des wenigstens einen Wandbauteiles bestimmte Aufnahmenut sowie eine Führungsnut zur Aufnahme mindestens eines Befestigungselements aufweist, welches Befestigungselement in Längsrichtung der Führungsnut verschieblich und festlegbar geführt und quer zur Längsrichtung der Führungsnut in dieser unverrückbar gehalten ist, dass zumindest ein erster Profilstababschnitt vorgesehen ist, der an zwei, im rechten Winkel zueinander angeordneten Profilstablängsseiten jeweils eine Aufnahmenut und eine Führungsnut aufweist, dass in die Aufnahmenuten des zumindest einen ersten Profilstababschnitts jeweils wenigstens eines der Wandbauteile aufgenommen und in den Führungsnuten des zumindest einen ersten Profilstababschnittes jeweils mindestens eines der Befestigungselemente vorgesehen ist, und dass das Wandelement zumindest in seinen vertikal orientierten Eckbereichen erste Profilstababschnitte aufweist.

Das erfindungsgemäße Wandelement ist aus miteinander verbundenen Profilstababschnitten montierbar. Mindestens einer dieser Profilstababschnitte weist an zwei seiner Profilstab-Längsseiten jeweils eine Aufnahmenut sowie eine Führungsnut zur Aufnahme mindestens eines Befestigungselements auf. Dieses mindestens eine Befestigungselement ist in der Führungsnut in Längsrichtung verschieblich und festlegbar geführt, während es darin quer zur Längsrichtung der Führungsnut in dieser unverrückbar gehalten ist. Die an dem mindestens einen Profilstababschnitt vorgesehenen Aufnahmenuten sind zur Aufnahme wenigstens flächigen und insbesondere plattenförmigen Wandbauteiles bestimmt, welches das Wandbauteil durchsetzende Pflanzöffnungen hat. Während sich der mindestens eine Profilstababschnitt an seinen Führungsnuten über Befestigungselemente mit anderen Profilstäben oder Profilstababschnitten verbinden lässt, ist in zumindest einer seiner Aufnahmenuten wenigstens ein Wandbauteil einsetzbar oder einschiebbar, welches das Wandbauteil durchsetzende Pflanzöffnungen hat. Die zur Begrünung vorgesehenen Pflanzen können somit durch die zumindest eine Pflanzöffnung hindurch im Inneren des erfindungsgemäßen Wandelements wurzeln. Da die für das erfindungsgemäße Wandelement verwendeten Profilstababschnitte das Einfügen des die Pflanzöffnungen aufweisenden Wandbauteiles und das Verbinden mehrerer solcher Profilstababschnitte miteinander wesentlich erleichtern, wird eine einfache Montage des erfindungsgemäßen Wandelements begünstigt.

Das erfindungsgemäße Wandelement hat mindestens einen ersten Profilstababschnitt, der an zwei, im rechten Winkel zueinander angeordneten Profilstablängsseiten jeweils eine Aufnahmenut und eine Führungsnut aufweist. Dieser erste Profilstababschnitt, der an seinen, im rechten Winkel zueinander angeordneten Längsseiten jeweils eine Aufnahmenut und eine Führungsnut aufweist,
erleichtert die Ausgestaltung des erfindungsgemäßen Wandelements in seinen außenliegenden Eckbereichen. Dabei ist in die Aufnahmenuten des zumindest einen ersten Profilstababschnitts jeweils wenigstens eines der Wandbauteile aufgenommen und in den Führungsnuten des zumindest einen ersten Profilstababschnittes jeweils zumindest eines der Befestigungselemente vorgesehen. Da in den vertikal orientierten Eckbereichen des erfindungsgemäßen Wandelelements solche ersten Profilstababschnitte vorgesehen sind, können die Umfangswände des Wandelements allseits aus flächigen oder plattenförmigen Wandbauteilen (mit oder ohne Pflanzöffnungen) gebildet sein.

Vorteilhaft ist es, wenn wenigstens ein zweiter Profilstababschnitt vorgesehen ist, der an zwei gegenüberliegenden Profilstablängsseiten jeweils eine Aufnahmenut und eine Führungsnut aufweist, und wenn diese Führungsnuten sowie diese Aufnahmenuten in parallelen Ebenen zueinander angeordnet sind. Mit Hilfe dieses zweiten Profilstababschnittes kann das erfindungsgemäße Wandelement in vertikaler Richtung unterteilt werden, so dass zumindest eine Wand des erfindungsgemäßen Wandelementes aus wenigstens zwei Wandbauteilen gebildet werden kann, von denen mindestens ein Wandbauteil Pflanzöffnungen trägt.

Als Befestigungselement zum Verbinden der Profilstababschnitte miteinander oder mit weiteren Profilstäben kann der Schraubenkopf einer Schraube oder die auf den Gewindeschafft einer Schraube aufgeschraubte Mutter verwendet werden, die in einer Führungsnut verschiebbar und festlegbar geführt ist. Vorteilhaft ist es jedoch, wenn das mindestens eine Befestigungselement einen Gleitstein aufweist, der in einer der Führungsnuten des wenigstens einen Profilstababschnittes verschiebbar geführt ist.

Dabei ist es vorteilhaft, wenn der mindestens eine Gleit- oder Nutenstein / mindestens einer der Gleit- oder Nutensteine zumindest ein Innengewinde aufweist, in das ein Gewindeabschnitt mit seinem Außengewinde eingeschraubt ist, welcher Gewindeabschnitt den Profilstababschnitt mit einem weiteren Profilstababschnitt verbindet.

Damit das erfindungsgemäße Wandelement das zum Wurzeln der zur Begrünung vorgesehenen Pflanzen erforderliche Pflanzsubstrat aufnehmen und speichern kann, kann es zweckmäßig sein, wenn das Wandelement kasten- oder prismenförmig ausgebildet ist. Um an zumindest einer Längsseite des Wandelements auch zumindest zwei kleinere Zuschnitte von Wandbauteilen verwenden zu können, und um diese Längsseite des Wandelementes zu segmentieren, ist es vorteilhaft, wenn die Kasten- oder Prismenform des Wandelements durch vertikal orientierte zweite Profilstababschnitte segmentiert ist.

Damit das Wandelement zumindest an seinen gegenüberliegenden Längsseiten, vorzugsweise an seinen großflächigen Längsseiten, eine entsprechende Begrünung tragen kann, ist es vorteilhaft, wenn das Wandelement zumindest an zwei seiner gegenüberliegenden Seiten jeweils zumindest ein, wenigstens ein Pflanzloch aufweisendes Wandbauteil trägt.

Eine Weiterbildung gemäß der Erfindung sieht vor, dass das vorzugsweise kasten- oder prismenförmige Wandelement einen Raumkörper bildet, dessen Raumkörperinnenraum mit Pflanzsubstrat für die zur Begrünung vorgesehenen Pflanzen gefüllt ist. Dieses Pflanzsubstrat kann ein sandiges, erdiges, torfiges oder mineralisches Substrat sein, in dem die zur Begrünung vorgesehenen Pflanzen wurzeln können.

Um das erfindungsgemäße Wandelement als Raumteiler, als Lärmschutzwand oder als Sichtschutzwand verwenden zu können, ist es vorteilhaft, wenn das kasten- oder prismenförmige Wandelement als bodenständiges Wandelement vorgesehen ist, und wenn dazu die bodenseitigen Stirnenden zumindest der in den Eckbereichen des Wandelementes vorgesehenen Profilstababschnitte als Standfüße des Wandelements ausgebildet oder vorgesehen sind.

Eine bevorzugte Ausführungsform gemäß der Erfindung sieht vor, dass das Wandelement auf einer der Sichtseite abgewandten Seite zumindest ein Beton-Fertigelement aufweist, an welchem die Profilstababschnitte des Wandelements gehalten sind, und dass das zumindest eine Beton-Fertigelement vorzugsweise als insbesondere bodenseitige Stütze des begrünbaren Wandelementes ausgebildet ist.

Dabei sieht eine bevorzugte Ausführungsform gemäß der Erfindung vor, dass das zumindest eine Beton-Fertigelement als insbesondere L-förmige Mauerscheibe oder L-Stein ausgebildet ist. Ist das zumindest eine Beton-Fertigelement als L-förmige Mauerscheibe ausgebildet, kann das begrünbare Wandelement auf den bodenseitigen Steg seiner L-Form stabil stehen, während demgegenüber die Profilstababschnitte an den vertikal orientierten Steg dieser L-förmigen Mauerscheibe gehalten sind.

Ein anderes vorteilhaftes Ausführungsbeispiel gemäß der Erfindung sieht vor, dass die Profilstababschnitte des Wandelements an einer Fassade eines Gebäudes gehalten sind. Somit kann das erfindungsgemäße Wandelement zur Fassadenbegrünung eines Gebäudes verwendet werden.

Das mit den Pflanzöffnungen versehene und die Sichtseite des erfindungsgemäßen Wandelements dienende Wandbauteil kann auch aus einer dünnen Metallplatte oder einem anderen, randseitig scharfen Material hergestellt sein. Eine besonders vorteilhafte Ausführungsform gemäß der Erfindung sieht daher vor, dass zumindest in eine der Pflanzöffnungen ein vorzugsweise becher- oder hülsenförmiges Pflanzlochschutzelement einsetzbar ist. Ein solches, in jeweils eine der Pflanzöffnungen eingesetztes Pflanzlochschutzelement schützt die durch die Pflanzöffnungen hindurch wachsenden Pflanzen gegen Verletzungen an den gegebenenfalls auch scharfkantigen Rändern des Pflanzloches. Zusätzlich oder stattdessen wird das Risiko reduziert, dass das im Inneren des Wandelements befindliche Substrat aus zumindest einer der Pflanzöffnungen ausrieseln oder austreten kann.

Bevorzugt wird eine Ausführungsform, bei der das zumindest eine Pflanzlochschutzelement bodenlos ausgebildet ist und an seinem bodenseitigen Umfangs-Teilbereich eine im Vergleich zum gegenüberliegenden Umfangs-Teilbereich kürzere Längserstreckung aufweist. Bei dieser bevorzugten Ausführungsform ist das Pflanzlochschutzelement bodenlos und somit als beidseits offene Hülse ausgebildet. Dabei weist das Pflanzlochschutzelement an seinem bodenseitigen Umfangs-Teilbereich eine im Vergleich zum gegenüberliegenden Umfangs-Teilbereich kürzere Längserstreckung auf, sodass das Wurzelwerk der das Pflanzlochschutzelement durchwachsenden Pflanzen gut in das im Inneren des Wandelements befindliche Pflanzsubstrat durchwurzeln kann, während ein Herabrieseln des Pflanzsubstrats von oben durch das Pflanzlochschutzelement hindurch wirkungsvoll vermieden wird.

Eine einfache und dennoch vorteilhafte Ausführungsform gemäß der Erfindung sieht vor, dass das zumindest eine Pflanzlochschutzelement an seinem der Sichtseite des Wandelements abgewandten Stirnende dazu schräg ausgebildet ist.

Um benachbarte Profilabschnitte zu dem erfindungsgemäßen Wandelement miteinander verbinden zu können, ist es vorteilhaft, wenn benachbarte Profilstababschnitte über wenigstens eine Schraub- oder eine Klickverbindung miteinander verbunden sind. Sind die Profilstababschnitte über eine Klickverbindung miteinander verbindbar, können diese Profilstababschnitte auch werkzeuglos zum erfindungsgemäßen Wandelement miteinander verbunden werden.

Vorteilhafte Weiterbildungen gemäß der Erfindung sehen vor, dass das zumindest eine Wandbauteil des Wandelements flächig und insbesondere plattenförmig ausgebildet ist. Das zumindest eine Wandbauteil des erfindungsgemäßen Wandelementes kann beispielsweise aus einem Blech oder auch aus einer insbesonderen wasserfesten Wärmedämmplatte hergestellt sein.

Eine besonders vorteilhafte Weiterbildung gemäß der Erfindung sieht jedoch vor, dass das zumindest eine Wandbauteil des erfindungsgemäßen Wandelements wenigstens in einem Teilbereich einen Lamellenrost aufweist, der aus einander kreuzenden Scharen von Stäben gebildet ist, von denen eine erste Schar voneinander beabstandeter paralleler Stäbe in vertikaler Richtung orientiert ist und von denen eine zweite Schar voneinander beabstandeter paralleler Stäbe in horizontaler Richtung orientiert ist, und dass die Pflanzöffnungen jeweils durch benachbarte horizontale und vertikale Stäbe umgrenzt sind.

Damit die Stäbe des aus einem Lamellenrost gebildeten Wandbauteiles das Pflanzsubtrat im Hohlraum des erfindungsgemäßen Wandelementes halten können, ist es vorteilhaft, wenn die in horizontaler Richtung orientierten Stäbe zur Außenseite des Wandelements hin schräg nach oben angewinkelt sind.

Das aus einem Lamellenrost gebildete Wandbauteil lässt sich besonders belastbar ausgestalten, wenn der wenigstens in einem Teilbereich des zumindest einen Wandbauteiles vorgesehene Lamellenrost außenumfangsseitig von einem Rahmen eingefasst ist.

Ein Hindurchrieseln auch eines körnigen Pflanzsubstrats durch das als Lamellenrost ausgebildete Wandbauteil wird verhindert, wenn der außenliegende Längsrand der in horizontaler Richtung orientierten Stäbe über die in vertikaler Richtung orientierten Stäbe vorsteht.

Das zumindest eine, aus einem Lamellenrost gebildete Wandbauteil lässt sich aus jedem geeigneten und ausreichend stabilen Material herstellen. Vorteilhaft ist es jedoch, wenn der Lamellenrost / die Lamellenroste aus einem metallischen oder nicht-metallischen Material hergestellt sind.

Eine vorteilhafte Ausführung gemäß der Erfindung sieht vor, dass der Lamellenrost / die Lamellenroste als Pressrost ausgebildet ist / sind, dass die in vertikaler Richtung orientierten Stäbe als Tragstäbe dienen, und dass die als Füllstäbe ausgebildeten und in horizontaler Richtung orientierten Stäbe in Einkerbungen der Tragstäbe eingesetzt sind.

Bei dem Verfahren der eingangs erwähnten Art sieht die erfindungsgemäße Lösung vor, dass das vorzugsweise kasten- oder prismenförmige und jeweils an zwei seiner gegenüberliegenden Seiten zumindest ein Wandbauteil aufweisende Wandelement mit Abstand von der Mauer an dieser befestigt wird und dass der zwischen dem zumindest einen, der Wand zugewandten Wandbauteil und der davon beabstandeten Mauer verbleibende Zwischenraum als Hinterlüftung ausgebildet und verwendet wird. Auch ein solches, zur Fassadenbegrünung dienendes Wandelement weist also an zwei gegenüberliegenden Seiten des Wandelements flächige und insbesondere plattenförmige Wandbauteile auf, die den mit Substrat gefüllten Hohl- oder Raumkörper-Innenraum begrenzen. Dabei ist die der Sichtseite abgewandte Seite des Wandelements von der das Wandelement tragenden Mauer derart beabstandet, dass der zwischen dem zumindest einen, der Wand zugewandten Wandbauteil und der davon beabstandeten Mauer verbleibende Zwischenraum als Hinterlüftung verwendbar ist.

Bei dem Bausatz der eingangs erwähnten Art besteht die erfindungsgemäße Lösung darin, dass mindestens einer der Profilstababschnitte dieses Bausatzes an zwei seiner Profilstablängsseiten jeweils eine, zur Aufnahme des wenigstens einen Wandbauteiles bestimmte Aufnahmenut sowie eine Führungsnut zur Aufnahme des mindestens eines Befestigungselements aufweist, welches Befestigungselement in Längsrichtung der Führungsnut verschieblich und festlegbar geführt und quer zur Längsrichtung der Führungsnut in dieser unverrückbar gehalten ist.

Weiterbildungen gemäß der Erfindung ergeben sich aus der nachfolgenden Beschreibung bevorzugter Ausführungsbeispiele in Verbindung mit den Ansprüchen sowie der Zeichnung. Nachstehend wird die Erfindung anhand bevorzugter Ausführungsbeispiele noch näher beschrieben.

Es zeigt:
- Fig. 1: ein kastenförmiges und aus miteinander verbundenen Profilstababschnitten montiertes Wandelement in einer Perspektivdarstellung, wobei dieses Wandelement zur Fassadenbegrünung an einer Mauer befestigt sein kann,
- Fig. 2: den in Fig. 1 rechten oberen Eckbereich des Wandelements in einer perspektivischen Detailansicht,
- Fig. 3: das Wandelement aus Fig. 1 und 2 im Bereich der etwa mittig im Wandelement angeordneten und eine vertikale Segmentierung bildenden Profilstababschnitte,
- Fig. 4: einen im Querschnitt dargestellten Profilstababschnitt, der an zwei im rechten Winkel zueinander angeordneten Profilstablängsseiten jeweils eine Aufnahmenut und eine Führungsnut aufweist,
- Fig. 5: einen ebenfalls im Querschnitt dargestellten Profilstababschnitt des in den Fig. 1 bis 3 gezeigten Wandelements, wobei der hier dargestellte zweite Profilstababschnitt an zwei gegenüberliegenden Profilstablängsseiten jeweils eine Aufnahmenut und eine Führungsnut aufweist, und wobei diese Führungsnuten sowie diese Aufnahmenuten in parallelen Ebenen zueinander angeordnet sind,
- Fig. 6: das Wandelement aus den Fig. 1 bis 3 in einem außenliegenden Eckbereich, wobei in die Aufnahmenuten des diesen Eckbereich bildenden Profilstababschnittes jeweils ein plattenförmiges Wandbauteil eingeschoben ist,
- Fig. 7: ein hier als bodenständiger Raumkörper ausgebildetes Wandelement, das hier prismen- oder im Querschnitt trapezförmig ausgebildet ist,
- Fig. 8: den bereits in Fig. 4 gezeigten und hier nochmals quergeschnittenen ersten Profilstababschnitt, der in den außenliegenden Eckbereichen des in Fig. 7 gezeigten Wandelements verwendet wird,
- Fig. 9: den bereits in Fig. 5 gezeigten und hier nochmals quergeschnittenen zweiten Profilstababschnitt, der in einer etwa mittigen Querschnittsebene des in Fig. 7 gezeigten Wandelements zur Segmentierung der gegenüberliegenden Flachseiten dieses Wandelements verwendet wird,
- Fig. 10: das Wandelement aus Fig. 7 in einem Detail-Querschnitt durch den zur Segmentierung verwendeten zweiten Profilstababschnitt, wobei in die auf gegenüberliegenden Längsseiten des Profilstababschnittes vorgesehenen Aufnahmenuten jeweils ein plattenförmiges Wandbauteil eingeschoben oder eingesetzt ist, und wobei zumindest eines dieser plattenförmiger Wandbauteile wenigstens ein Pflanzloch aufweist,
- Fig. 11: ein begrünbares Wandelement in einem Längsschnitt im Bereich der ein plattenförmiges Wandbauteil durchsetzenden Pflanzöffnung, wobei in die Pflanzöffnung oder das Pflanzloch ein bodenloses und hülsenförmiges Pflanzlochschutzelement eingesetzt ist,
- Fig. 12: ein zwischen zwei vertikale Profilstababschnitte einschiebbares und aus einem Lamellenrost gebildetes Wandbauteil vor dem Einschieben in die Aufnahmenuten dieser Profilstababschnitte, und
- Fig. 13: das aus dem als Wandbauteil dienenden Lamellenrost sowie den vertikalen Profilstababschnitten gebildete Wandelement in einer perspektivischen Darstellung in montiertem Zustand.

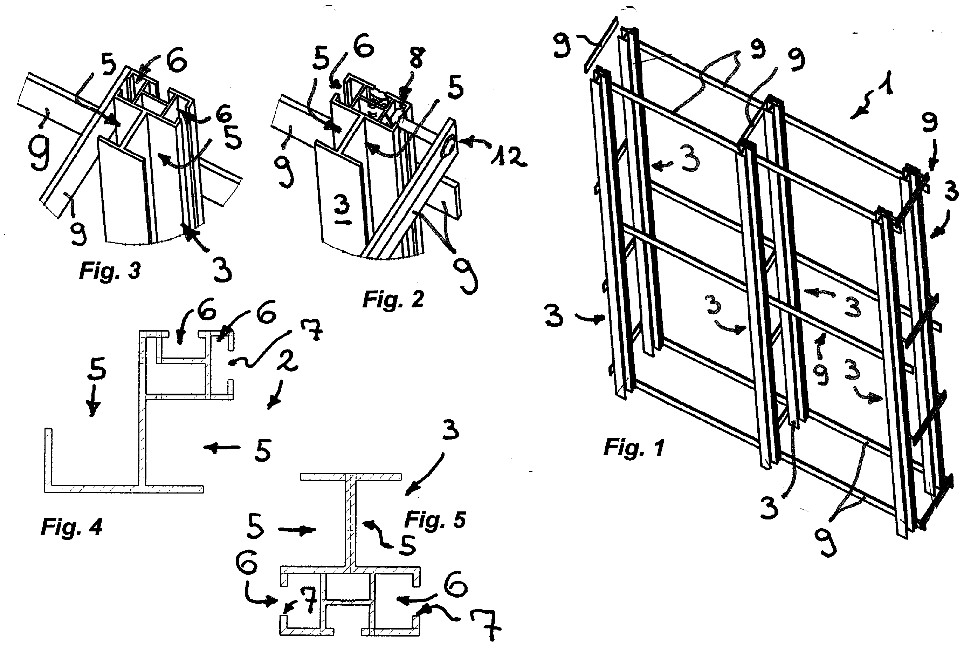

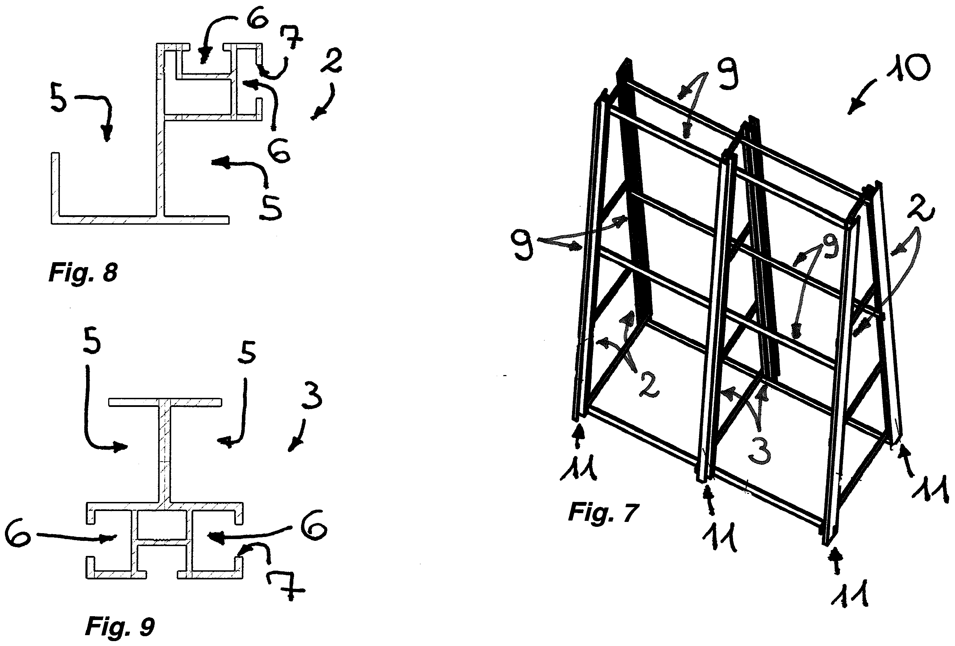

In den Fig. 1, 7 und 13 sind verschiedene Ausführungen 1, 10 und 113 eines begrünbaren Wandelements dargestellt. Diese Wandelemente 1, 10, 113 sind aus einem Bausatz montiert, der miteinander verbindbare Profilstababschnitte 2, 3 und wenigstens ein flächiges und insbesondere plattenförmiges Wandbauteil 4 umfasst, das an mindestens einem der Profilstababschnitte 2, 3 gehalten ist und zumindest eine das Wandbauteil 4 durchsetzende, in den Figuren 1 und 7 nicht weiter gezeigte Pflanzöffnung 17 hat.

Die zur Montage der Wandelemente 1, 10, 113 verwendeten Profilabschnitte 2, 3 sind in den Fig. 4, 5 und 8, 9 jeweils in einem Querschnitt näher dargestellt. Wie aus den Fig. 4, 5; 8, 9 zu entnehmen ist, weisen die zum oben erwähnten Bausatz gehörenden Profilstababschnitte 2, 3 jeweils an zwei ihrer Profilstab-Längsseiten jeweils eine, zur Aufnahme des Wandbauteiles 4 bestimmte Aufnahmenut 5 auf, in welche das Wandbauteil 4 mit einem seiner Schmalränder eingeschoben oder eingesetzt werden kann.

Des Weiteren weisen die Profilstababschnitte 2, 3 an diesen Profilstab-Längsseiten jeweils eine Führungsnut 6 auf, die zur Aufnahme mindestens eines Befestigungselementes, beispielsweise eines Gleit- oder Nutensteines oder eines Schraubenkopfes bestimmt ist und dieses Befestigungselement in Längsrichtung der Führungsnut 6 verschieblich und festlegbar, aber auch quer zur Längsrichtung der Führungsnut 6 in dieser unverrückbar umgreift.

Während die Nutwände der Aufnahmenuten 5 in Einsetzrichtung offen ausgebildet sein und/oder sich beidseits an das Wandbauteil 4 anlegen können, sind die freien Längsränder der Nutwände der Führungsnuten 6 zueinander abgewinkelt und bilden somit beidseits einer Führungsöffnung 7 einen Hinterschnitt.

Der zur Montage der Wandelemente 1, 10, 113 verwendete Bausatz weist mindestens einen, in den Fig. 4, 6 und 8 im Querschnitt näher dargestellten ersten Profilstababschnitt 2 auf, der an zwei, im rechten Winkel zueinander angeordneten Profilstab-Längsseiten jeweils eine Aufnahmenut 5 und eine Führungsnut 6 aufweist. Dieser erste Profilstababschnitt 2 kann also in seinen Aufnahmenuten 5 im rechten Winkel zueinander angeordnete Wandbauteile 4 tragen, wobei dieser erste Profilstababschnitt 2 auf der der Sichtseite abgewandten Rückseite des Wandbauteiles 4 an seinen Führungsnuten mit anderen Profilstababschnitten verbindbar ist.

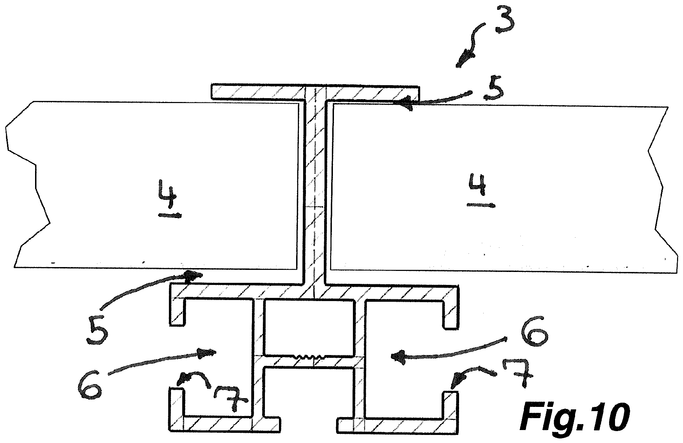

Der zur Montage der Wandelemente 1, 10, 113 verwendete Bausatz weist auch mindestens einen, in den Fig. 5, 9 und 10 im Querschnitt näher dargestellten zweiten Profilstababschnitt 3 auf, der an zwei gegenüberliegenden Profilstablängsseiten jeweils eine Aufnahmenut 5 und eine Führungsnut 6 aufweist. Dabei sind die an den beiden gegenüberliegenden Profilstab-Längsseiten angeordneten Führungsnuten 6 und Aufnahmenuten 5 in parallelen Ebenen angeordnet. Auch hier wird die gezeigte Ausführungsform bevorzugt, bei der die durch die Führungsnuten 6 gebildete Ebene auf der der Sichtseite abgewandten Rückseite des Wandbauteiles 4 angeordnet ist.

Um die Profilstababschnitte 2, 3 miteinander und gegebenenfalls auch mit weiteren Profilstababschnitten oder Profilstäben zu verbinden, kann es vorteilhaft sein, wenn das zumindest eine Befestigungselement als Gleit- oder Nutenstein ausgebildet ist, der zumindest ein Innengewinde aufweist, in das ein Gewindeabschnitt mit seinem Außengewinde eingeschraubt ist und diesen Profilstababschnitt mit anderen Profilstababschnitten oder Profilstäben verbindet.

In Fig. 2 ist angedeutet, dass als Befestigungselement auch ein in der Führungsnut 6 geführter Schraubenkopf oder eine auf dem Gewindeschaft einer Schraube 12 aufgeschraubte Schraubenmutter 8 dienen kann. Dieses Befestigungselement ist hier über wenigstens einen leistenförmigen (dritten) Profilstababschnitt 9 mit weiteren ersten und zweiten Profilstababschnitten 2, 3 derart verbunden, dass das Wandelement 1, 10 einen kastenförmigen (vgl. Fig. 1) oder einen prismen- oder im Querschnitt trapezförmigen (vgl. Fig. 7) dreidimensionalen Raumkörper bildet.

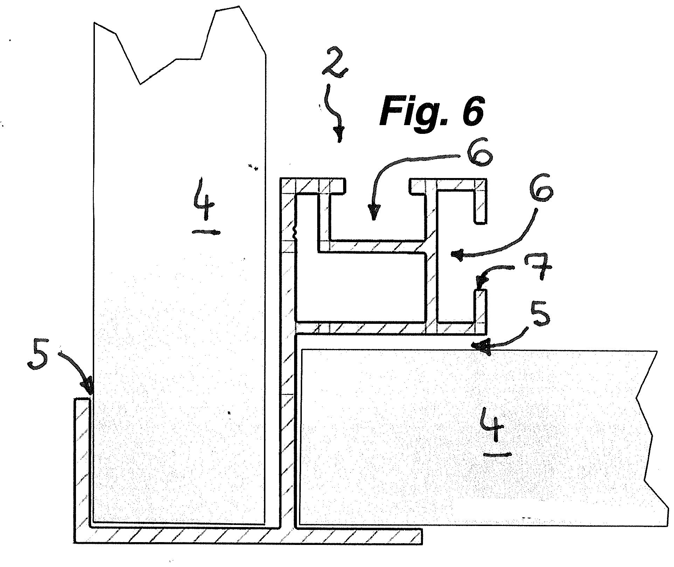

Die in den Fig. 1 und 7 gezeigten Wandelemente 1, 10 weisen in ihren außenliegenden, vertikal orientierten Eckbereichen jeweils erste Profilstababschnitte 2 auf, so dass der entsprechende Raumkörper - wie in Fig. 6 gezeigt ist - an allen Umfangsseiten mit zumindest einem Wandbauteil verschlossen werden kann, wobei mindestens ein der an den Sichtseiten verwendeten Wandbauteile zumindest eine Pflanzöffnung aufweisen sollte. In den derart umschlossenen Raumkörper ist anschließend Erde, Torf oder jedes andere geeignete Pflanzsubstrat einfüllbar, in dem die zur Begrünung vorgesehenen und durch die Pflanzöffnungen 17 hindurch über das Wandbauteil 4 hinauswachsenden Pflanzen wurzeln können.

Das in Fig. 7 gezeigte prismen- oder im Querschnitt trapezförmige Wandelement 10, ist als bodenständiges, d.h. aufstellbares Wandelement 10 vorgesehen. Dabei sind zumindest die bodenseitigen Stirnenden der in den Eckbereichen des Wandelementes 10 vorgesehenen Profilstababschnitte als Standfüße 11 des Wandelements 10 ausgebildet oder vorgesehen. Demgegenüber sieht eine andere Anwendung gemäß der Erfindung vor, dass das Wandelement an einer Mauer, praktisch als Vorwand, befestigt ist. So kann beispielsweise das in Fig. 1 abgebildete kastenförmige Wandelement 1 zur Fassadenbegrünung vorzugsweise mit Abstand an einer Mauer befestigt werden. Dabei wird eine Ausführung bevorzugt, in der das Wandelement 1 an gegenüberliegenden Seiten mit Wandbauteilen verschlossen ist, wobei das der Mauer abgewandte sichtseitige Wandbauteil 4 die Pflanzöffnungen 17 für die zur Begrünung vorgesehenen Pflanzen trägt. Da auch dieses Wandelement 1 an gegenüberliegenden Seiten mit Wandbauteilen verschlossen ist, kann der zwischen der hier nicht dargestellten Mauer und dem der Sichtseite abgewandten rückseitigen Wandbauteil verbleibende Freiraum als Hinterlüftung verwendet werden.

Die Profilstababschnitte 2, 3 und gegebenenfalls auch 9 können aus jedem geeigneten Material hergestellt sein. Eine kostengünstige und stabile Ausführung gemäß der Erfindung sieht dabei vor, dass die Profilstababschnitte 2, 3 aus einem Metall und insbesondere aus einem Aluminium-Strangpressprofil abgelängt sind. Die Wandbauteile 4 können ebenfalls aus jedem geeigneten Material, beispielsweise auch aus Metallblech, hergestellt sein. Eine vorteilhafte Ausführung sieht beispielsweise vor, dass die in die Aufnahmenuten 5 eingeschobenen Wandbauteile 4 aus einem wasser- und verrottungsbeständigen Material, beispielsweise einer Wärmedämmstoffplatte, hergestellt sind.

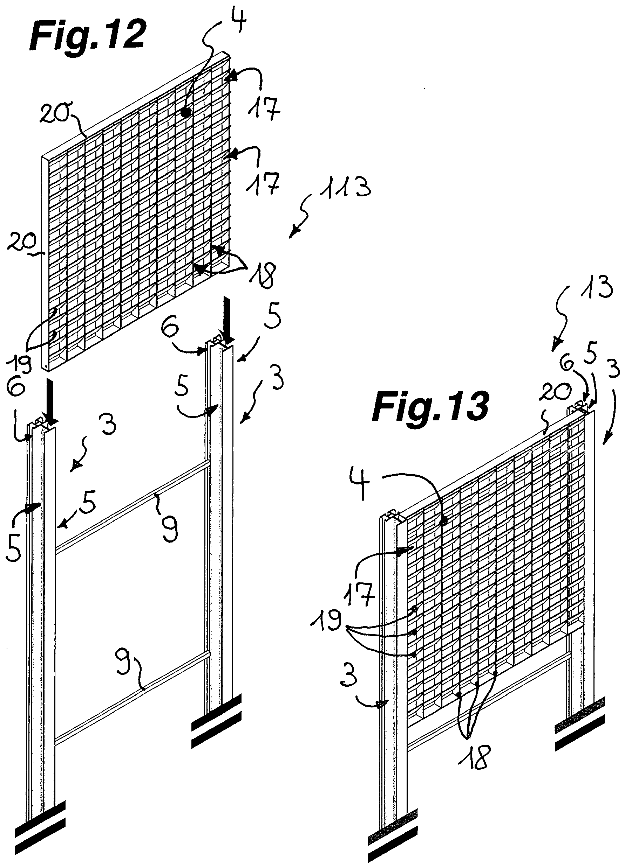

Die Wandbauteile 4 der in den Fig. 1 bis 11 gezeigten Wandelemente sind hier plattenförmig ausgebildet und aus einer Wärmedämmstoffplatte hergestellt. Aus einem Vergleich der Fig. 1 bis 11 einerseits und der Fig. 12 und 13 andererseits wird deutlich, dass die in den Fig. 1 bis 13 gezeigten Wandelemente 1, 10 113 auch zumindest ein Wandbauteil 4 aufweisen können, das zumindest in einem Teilbereich einen Lamellenrost aufweist, der aus einander kreuzenden Scharen von Stäben 18, 19 gebildet ist, von denen eine erste Schar voneinander beabstandeter paralleler Stäbe 18 in vertikaler Richtung orientiert ist und von denen eine zweite Schar voneinander beabstandeter paralleler Stäbe 19 in horizontaler Richtung orientiert ist, wobei die Pflanzöffnungen 17 jeweils durch benachbarte horizontale und vertikale Stäbe 18, 19 umgrenzt sind. Damit auch das als Lamellenrost ausgebildete Wandbauteil 4 das im Hohlraum des Wandelements befindliche Pflanzsubstrat zurückhalten kann, ist es vorteilhaft, wenn die in horizontaler Richtung orientierten Stäbe 19 quer zur Außenseite des Wandelements 1, 10, 113 schräg nach oben angewinkelt sind und wenn der außenliegende Längsrand der in horizontaler Richtung orientierten Stäbe 19 über die in vertikaler Richtung orientierten Stäbe 18 vorsteht. In Figur 12 ist erkennbar, dass der wenigstens in einem Teilbereich des zumindest einen Wandbauteiles 4 vorgesehene Lamellenrost außenumfangsseitig von einem Rahmen 20 eingefasst ist. Der das zumindest eine Wandbauteil 4 bildende Lamellenrost kann aus einem metallischen oder nicht-metallischen Material hergestellt sein. Insbesondere bei einem aus metallischem Material hergestellten Lamellenrost kann es zweckmäßig sein, wenn dieser Lamellenrost als Pressrost ausgebildet ist, wenn die in vertikaler Richtung orientierten Stäbe 18 als Tragstäbe dienen und wenn die als Füllstäbe ausgebildeten und in horizontaler Richtung orientierte Stäbe 19 in Einkerbungen der Tragstäbe 18 eingesetzt sind.

In den Fig. 1 und 7 wird deutlich, dass die Wandelemente 1, 10, 113 mit Hilfe der zweiten Profilstababschnitte, die jeweils in einer Längsmittelebene der Wandelemente 1, 10, 113 angeordnet sind, segmentiert werden können. Auf diese Weise werden die großflächigen Außenwände der Wandelemente 1, 10,113 auch jeweils aus zumindest zwei plattenförmigen Wandbauteilen 4 montiert.

Eine hier nicht dargestellte Ausführungsform gemäß der Erfindung sieht vor, dass das begrünbare Wandelement auf einer der Sichtseite abgewandten Seite ein Beton-Fertigelement aufweist, an welchem die Profilstababschnitte des Wandelements gehalten sind. Dieses Beton-Fertigelement ist vorzugsweise als bodenständige Stütze des Wandelements ausgebildet. Dazu kann das zumindest eine Beton-Fertigelement als L-förmige Mauerscheibe ausgebildet sein, die auf dem bodenseitigen Steg ihrer L-Form stabil steht und an dem vertikalen Steg der L-Form die Profilstababschnitte trägt.

Möglich ist aber auch, dass das Wandelement an der Fassade eines Gebäudes gehalten ist und zur Fassadenbegrünung dient.

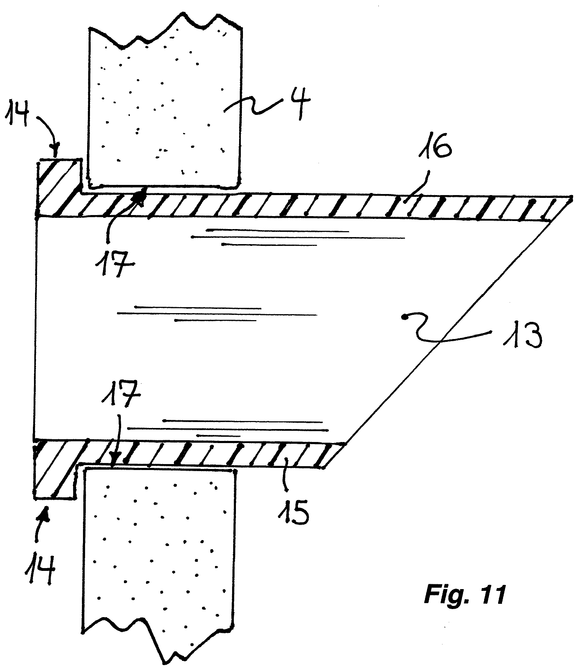

In Figur 11 ist ein plattenförmiges Wandbauteil 4 im Bereich einer seiner Pflanzöffnungen 17 in einem Längsschnitt gezeigt. In die Pflanzöffnung 17 des plattenförmigen Wandbauteiles 4 ist ein hier hülsenförmiges Pflanzlochschutzelement 13 eingesetzt. Das hülsenförmige Pflanzlochschutzelement 13 weist hier eine zylindrische Umfangswandung auf, die an ihrem sichtseitigen Stirnende einen Ringflansch 14 trägt. Das Pflanzlochschutzelement 13 ist in die Pflanzöffnung 17 des Wandbauteiles 4 einsetzbar, bis der Ringflansch 14 sichtseitig an dem Wandbauteil 4 anliegt. Das Pflanzlochschutzelement 13 ist bodenlos ausgebildet und weist an seinem bodenseitigen Umfangsteilbereich 15 eine im Vergleich zum gegenüberliegenden Umfangsteilbereich 16 kürzere Längserstreckung auf. Das Pflanzlochschutzelement 14 ist dazu an seinem der Sichtseite des Wandelements abgewandten Stirnende schräg ausgebildet. Durch diese stirnseitig schräge Ausgestaltung des hülsenförmigen Pflanzlochschutzelements 13 wird vermieden, dass das im Inneren des Wandelements befindliche Pflanzsubstrat aus der im Wandbauteil 4 befindlichen Pflanzöffnung 17 herausrieseln kann. Ungeachtet dessen kann die das Pflanzlochschutzelement 13 durchsetzende Pflanze gut im Pflanzsubstrat wurzeln. Gleichzeitig wird vermieden, dass sich die das Pflanzlochschutzelement 13 durchsetzende Pflanze an den die Pflanzöffnung 17 im Wandbauteil 4 umgrenzenden, eventuell scharfkantigen Öffnungsrändern verletzen kann.

In den hier gezeigten Ausführungsbeispielen sind die benachbarten Profilstababschnitte des Wandelements über wenigstens eine Schraubverbindung miteinander verbunden. Möglich ist aber auch, dass diese benachbarten Profilstababschnitte über wenigstens eine Klickverbindung miteinander verbunden sind. Die Profilstababschnitte des Wandelements lassen sich auf einfache Weise auch werkzeuglos miteinander verbinden, wenn eine entsprechende Klickverbindung vorgesehen ist.

### Bezugszeichenliste

- 1: Wandelement (gemäß den Fig. 1 bis 3)
- 2: erster Profilstababschnitt 3
- 3: zweiter Profilstababschnitt
- 4: plattenförmiges Wandbauteil mit Pflanzöffnungen/-löchern
- 5: Aufnahmenut
- 6: Führungsnut
- 7: Führungsöffnung
- 8: Schraubenmutter
- 9: (dritter) Profilstababschnitt
- 10: Wandelement gemäß Fig. 7
- 11: Standfüße
- 12: Schraube
- 13: Pflanzlochschutzelement
- 14: Ringflansch
- 15: bodenseitiger Umfangs-Teilbereich
- 16: gegenüberliegender oberer Umfangs-Teilbereich
- 17: Pflanzöffnung
- 18: in vertikaler Richtung orientierte (Trag-)Stäbe
- 19: in horizontaler Richtung orientierte (Füll-)Stäbe
- 20: Rahmen des in Figur 12 und 13 gezeigten Wandelements 113
- 113: Wandelement (gemäß den Figuren 12 und 13)

## Patentansprüche

1. Begrünbares Wandelement (1, 10, 113), das zumindest an einer Sichtseite des Wandelements (1, 10, 113) aus miteinander verbundenen Profilstababschnitten (2, 3, 9) montiert ist, und wenigstens ein Wandbauteil (4) aufweist, das an mindestens einem der Profilstababschnitte (2, 3) gehalten ist und zumindest eine das Wandbauteil (4) durchsetzende Pflanzöffnung (17) hat, **dadurch gekennzeichnet, dass** mindestens einer der Profilstababschnitte (2, 3) an zwei seiner Profilstablängsseiten jeweils eine, zur Aufnahme des wenigstens einen Wandbauteiles (4) bestimmte Aufnahmenut (5) sowie eine Führungsnut (6) zur Aufnahme mindestens eines Befestigungselements aufweist, welches Befestigungselement in Längsrichtung der Führungsnut (6) verschieblich und festlegbar geführt und quer zur Längsrichtung der Führungsnut (6) in dieser unverrückbar gehalten ist, dass mindestens ein erster Profilstababschnitt (2) vorgesehen ist, der an zwei, im rechten Winkel zueinander angeordneten Profilstablängsseiten jeweils eine Aufnahmennut (5) und eine Führungsnut (6) aufweist, dass in die Aufnahmenuten (5) des zumindest einen ersten Profilstababschnitts (2) jeweils wenigstens eines der Wandbauteile (4) aufgenommen und in den Führungsnuten (6) des zumindest einen ersten Profilstababschnitts (2) jeweils mindestens eines der Befestigungselemente vorgesehen ist, und dass das Wandelement (1,10) zumindest in seinen vertikal orientierten Eckbereichen jeweils erste Profilstababschnitte (2) aufweist.

2. Wandelement nach Anspruch 1, **dadurch gekennzeichnet, dass** wenigstens ein zweiter Profilstababschnitt (3) vorgesehen ist, der an zwei gegenüberliegenden Profilstablängsseiten jeweils eine Aufnahmenut (5) und eine Führungsnut (6) aufweist, und dass diese Führungsnuten (6) sowie diese Aufnahmenuten (5) in parallelen Ebenen angeordnet sind.

3. Wandelement nach Anspruch 1 oder 2, **dadurch gekennzeichnet, dass** das mindestens eine Befestigungselement einen Gleit- oder Nutenstein aufweist, der in einer der Führungsnuten (6) des wenigstens einen Profilstababschnittes (2, 3) verschiebbar geführt ist.

4. Wandelement nach Anspruch 3, **dadurch gekennzeichnet, dass** der mindestens eine Gleitstein / mindestens einer der Gleitsteine zumindest ein Innengewinde aufweist, in das ein Gewindeabschnitt mit seinem Außengewinde eingeschraubt ist, welcher Gewindeabschnitt den Profilstababschnitt mit einem weiteren Profilstababschnitt verbindet.

5. Wandelement nach einem der Ansprüche 1 bis 4, **dadurch gekennzeichnet, dass** das Wandelement kasten- oder prismenförmig ausgebildet ist.

6. Wandelement nach Anspruch 5, **dadurch gekennzeichnet, dass** die Kasten- oder Prismenform des Wandelementes (1, 10) durch zweite Profilstababschnitte (3) segmentiert ist.

7. Wandelement nach einem der Ansprüche 1 bis 6, **dadurch gekennzeichnet, dass** das Wandelement (1, 10) zumindest an zwei seiner gegenüberliegenden Seiten jeweils wenigstens ein, mindestens eine Pflanzöffnung (17) aufweisendes Wandbauteil (4) trägt.

8. Wandelement nach einem der Ansprüche 1 bis 7, **dadurch gekennzeichnet, dass** das Wandelement (1, 10) einen Raumkörper begrenzt, dessen Raumkörperinnenraum mit Pflanzsubstrat für die zur Begrünung vorgesehene Pflanzen gefüllt ist.

9. Wandelement nach einem der Ansprüche 1 bis 8, **dadurch gekennzeichnet, dass** das Wandelement (10) als bodenständiges Wandelement vorgesehen ist, und dass dazu die bodenseitigen Stirnenden zumindest der in den Eckbereichen des Wandelementes (10) vorgesehenen Profilstababschnitte als Standfüße (11) des Wandelementes (10) ausgebildet sind.

10. Wandelement nach einem der Ansprüche 1 bis 9, **dadurch gekennzeichnet, dass** das Wandelement auf einer der Sichtseite abgewandten Seite zumindest ein Beton-Fertigelement aufweist, an welchem die Profilstababschnitte (2, 3, 9) des Wandelements gehalten sind, und dass das Beton-Fertigelement vorzugsweise als insbesondere bodenständige Stütze des Wandelements ausgebildet ist.

11. Wandelement nach Anspruch 10, **dadurch gekennzeichnet, dass** das Beton-Fertigelement als insbesondere L-förmige Mauerscheibe oder als L-Stein ausgebildet ist.

12. Wandelement nach einem der Ansprüche 1 bis 11, **dadurch gekennzeichnet, dass** zumindest in eine der Pflanzöffnungen (17) ein vorzugsweise becher- oder hülsenförmiges Pflanzlochschutzelement (13) einsetzbar ist.

13. Wandelement nach Anspruch 12, **dadurch gekennzeichnet, dass** das zumindest eine Pflanzlochschutzelement (13) bodenlos ausgebildet ist und an seinem bodenseitigen Umfangs-Teilbereich (15) eine im Vergleich zum gegenüberliegenden Umfangs-Teilbereich (16) kürzere Längserstreckung aufweist.

14. Wandelement nach Anspruch 12 oder 13, **dadurch gekennzeichnet, dass** das zumindest Pflanzlochschutzelement (13) an seinem der Sichtseite des Wandelements abgewandten Stirnseite schräg ausgebildet ist.

15. Wandelement nach einem der Ansprüche 1 bis 14, **dadurch gekennzeichnet, dass** benachbarte Profilstababschnitte (2, 3, 9) über wenigstens eine Schraub- oder Klickverbindung miteinander verbunden sind.

16. Wandelement nach einem der vorstehenden Ansprüche, **dadurch gekennzeichnet, dass** die Profilstababschnitte (2, 3, 9) des Wandelements (1, 10) an einer Fassade eines Gebäudes gehalten sind.

17. Wandelement nach einem der Ansprüche 1 bis 16, **dadurch gekennzeichnet, dass** das zumindest eine Wandbauteil (4) flächig und insbesondere plattenförmig ausgebildet ist.

18. Wandelement nach einem der Ansprüche 1 bis 17, **dadurch gekennzeichnet, dass** das zumindest eine Wandbauteil (4) wenigstens in einem Teilbereich einen Lamellenrost aufweist, der aus einander kreuzenden Scharen von Stäben (18, 19) gebildet ist, von denen eine erste Schar voneinander beabstandeter paralleler Stäbe (18) in vertikaler Richtung orientiert ist und von denen eine zweite Schar voneinander beabstandeter paralleler Stäbe (19) in horizontaler Richtung orientiert ist, und dass die Pflanzöffnungen (17) jeweils durch benachbarte horizontale und vertikale Stäbe (18, 19) umgrenzt sind.

19. Wandelement nach Anspruch 18, **dadurch gekennzeichnet, dass** die in horizontaler Richtung orientierten Stäbe (19) zur Außenseite des Wandelements (113) schräg nach oben angewinkelt sind.

20. Wandelement nach Anspruch 18 oder 19, **dadurch gekennzeichnet, dass** der wenigstens in einem Teilbereich des zumindest einen Wandelements (113) vorgesehene Lamellenrost außenumfangsseitig von einem Rahmen (20) umfasst ist.

21. Wandelement nach einem der Ansprüche 18 bis 20, **dadurch gekennzeichnet, dass** der außenliegende Längsrand der in horizontaler Richtung orientierten Stäbe (19) über die in vertikaler Richtung orientierten Stäbe (18) vorsteht.

22. Wandelement nach einem der Ansprüche 18 bis 21, **dadurch gekennzeichnet, dass** der Lamellenrost / die Lamellenroste aus einem metallischen oder nicht-metallischen Material hergestellt sind.

23. Wandelement nach einem der Ansprüche 18 bis 22, **dadurch gekennzeichnet, dass** der Lamellenrost / die Lamellenroste als Pressrost ausgebildet ist/sind, dass die in vertikaler Richtung orientierten Stäbe (18) als Tragstäbe dienen, und dass die als Füllstäbe ausgebildeten und in horizontaler Richtung orientierten Stäbe (19) in Einkerbungen der Tragstäbe (18) eingesetzt sind.

24. Verfahren zur Montage eines begrünbaren Wandelements (1, 10) gemäß einem der Ansprüche 1 bis 23 an einer Mauer, **dadurch gekennzeichnet, dass** das jeweils an zwei seiner gegenüberliegenden Seiten zumindest eine Platte aufweisende Wandelement (1) mit Abstand von der Mauer an dieser befestigt wird, und dass der zwischen der zumindest einen, der Wand zugewandten Platte und der davon beabstandeten Mauer verbleibende Zwischenraum als Hinterlüftung ausgebildet und verwendet wird.

25. Bausatz zur Montage eines begrünbaren Wandelements, der miteinander verbindbare Profilstababschnitte (2, 3, 9) aufweist, der wenigstens ein Wandbauteil mit mindestens einer das Wandbauteil (4) durchsetzenden Pflanzöffnung (17) hat, das (4) an mindestens einem der Profilstababschnitte (2, 3) montierbar ist, und der mindestens ein Befestigungselement aufweist, **dadurch gekennzeichnet, dass** mindestens einer der Profilstababschnitte (2, 3) an zwei seiner Profilstablängsseiten jeweils eine, zur Aufnahme des wenigstens einen Wandbauteiles (4) bestimmte Aufnahmenut (5) sowie eine Führungsnut (6) zur Aufnahme des mindestens eines Befestigungselements aufweist, welches Befestigungselement in Längsrichtung der Führungsnut (6) verschieblich und festlegbar geführt und quer zur Längsrichtung der Führungsnut (6) in dieser unverrückbar gehalten ist.

## Claims

1. Greenable wall element (1, 10, 113), which is mounted at least on a visible side of the wall element (1, 10, 113) comprising interconnected profile bar sections (2, 3, 9), and has at least one wall component (4), which is held on at least one of the profile bar sections (2, 3) and has at least one planting opening (17) passing through the wall component (4), **characterized in that** at least one of the profile bar sections (2, 3) has on each of two of the longitudinal sides of the profile bar a receiving slot (5), intended for receiving the at least one wall component (4), and a guiding slot (6), intended for receiving at least one fastening element, which fastening element is guided displaceably and fixably in the longitudinal direction of the guiding slot (6) and is held immovably in the guiding slot (6) transversely to the longitudinal direction thereof, **in that** at least one first profile bar section (2) is provided, having on each of two longitudinal sides of the profile bar arranged at right angles to one another a receiving slot (5) and a guiding slot (6), **in that** at least one of the wall components (4) is respectively accommodated in the receiving slots (5) of the at least one first profile bar section (2) and at least one of the fastening elements is respectively provided in the guiding slots (6) of the at least one first profile bar section (2), and **in that** the wall element (1, 10) has at least in each of its vertically oriented corner regions first profile bar sections (2).

2. Wall element according to Claim 1, **characterized in that** at least one second profile bar section (3) is provided, having on each of two opposite longitudinal sides of the profile bar a receiving slot (5) and a guiding slot (6), and **in that** these guiding slots (6) and these receiving slots (5) are arranged in parallel planes.

3. Wall element according to Claim 1 or 2, **characterized in that** the at least one fastening element has a gliding or sliding block, which is guided displaceably in one of the guiding slots (6) of the at least one profile bar section (2, 3).

4. Wall element according to Claim 3, **characterized in that** the at least one gliding block / at least one of the gliding blocks has at least one internal thread, into which a threaded section has been screwed by its external thread, which threaded section connects the profile bar section to a further profile bar section.

5. Wall element according to one of Claims 1 to 4, **characterized in that** the wall element is formed in the shape a box or prism.

6. Wall element according to Claim 5, **characterized in that** the box or prism shape of the wall element (1, 10) is segmented by second profile bar sections (3).

7. Wall element according to one of Claims 1 to 6, **characterized in that** the wall element (1, 10) bears at least on each of two of its opposite sides at least one wall component (4), having at least one planting opening (17).

8. Wall element according to one of Claims 1 to 7, **characterized in that** the wall element (1, 10) delimits a spatial body, the interior of which spatial body is filled with planting substrate for the plants provided for the greening.

9. Wall element according to one of Claims 1 to 8, **characterized in that** the wall element (10) is provided as a wall element standing on the ground, and **in that** for this purpose the extreme ends at the bottom, at least of the profile bar sections provided in the corner regions of the wall element (10), are formed as standing feet (11) of the wall element (10).

10. Wall element according to one of Claims 1 to 9, **characterized in that** the wall element has on a side remote from the visible side at least one precast concrete element, on which the profile bar sections (2, 3, 9) of the wall element are held, and **in that** the precast concrete element is preferably formed as a support, in particular standing on the ground, of the wall element.

11. Wall element according to Claim 10, **characterized in that** the precast concrete element is formed as in particular an L-shaped wall panel or as an L-shaped block.

12. Wall element according to one of Claims 1 to 11, **characterized in that** a preferably cup-shaped or sleeve-shaped planting-hole protective element (13) can be inserted at least into one of the planting openings (17).

13. Wall element according to Claim 12, **characterized in that** the at least one planting-hole protective element (13) is formed without a bottom and has a shorter longitudinal extent at its circumferential subregion (15) at the bottom in comparison with the opposite circumferential subregion (16).

14. Wall element according to Claim 12 or 13, **characterized in that** the at least one planting-hole protective element (13) is formed obliquely on its end face remote from the visible side of the wall element.

15. Wall element according to one of Claims 1 to 14, **characterized in that** adjacent profile bar sections (2, 3, 9) are interconnected by way of at least one screw or click connection.

16. Wall element according to one of the preceding claims, **characterized in that** the profile bar sections (2, 3, 9) of the wall element (1, 10) are held on a facade of a building.

17. Wall element according to one of Claims 1 to 16, **characterized in that** the at least one wall component (4) is formed as flat and, in particular, plate-shaped.

18. Wall element according to one of Claims 1 to 17, **characterized in that** the at least one wall component (4) has, at least in a subregion, a slatted grating which is formed from mutually crossing groups of bars (18, 19), of which a first group of spaced-apart parallel bars (18) is oriented in the vertical direction and of which a second group of spaced-apart parallel bars (19) is oriented in the horizontal direction, and **in that** the planting openings (17) are each bounded by adjacent horizontal and vertical bars (18, 19).

19. Wall element according to Claim 18, **characterized in that** the bars (19) oriented in the vertical direction are angled obliquely upwards towards the outer side of the wall element (113).

20. Wall element according to Claim 18 or 19, **characterized in that** the slatted grating provided at least in a subregion of the at least one wall element (113) is surrounded at its outer periphery by a frame (20).

21. Wall element according to one of Claims 18 to 20, **characterized in that** the outer longitudinal edge of the bars (19) oriented in the horizontal direction projects beyond the bars (18) oriented in the vertical direction.

22. Wall element according to one of Claims 18 to 21, **characterized in that** the slatted grating / the slatted gratings is/are produced from a metallic or non-metallic material.

23. Wall element according to one of Claims 18 to 22, **characterized in that** the slatted grating / the slatted gratings is/are formed as a pressed grating, **in that** the bars (18) oriented in the vertical direction serve as suppoFrting bars, and **in that** the bars (19) formed as filling bars and oriented in the horizontal direction have been inserted into indentations in the supporting bars (18).

24. Method for mounting a greenable wall element (1, 10) according to one of Claims 1 to 23 on a wall, **characterized in that** the wall element (1) having on each of two of its opposite sides at least one plate is fastened on the wall at a distance from it, and **in that** the intermediate space remaining between the at least one plate facing the wall and the wall at a distance from it is formed and used as rear ventilation.

25. Kit for mounting a greenable wall element, which has interconnectable profile bar sections (2, 3, 9), which has at least one wall component with at least one planting opening (17) passing through the wall component (4), which (4) can be mounted on at least one of the profile bar sections (2, 3), and which has at least one fastening element, **characterized in that** at least one of the profile bar sections (2, 3) has on each of two of the longitudinal sides of the profile bar a receiving slot (5), intended for receiving the at least one wall component (4), and a guiding slot (6), intended for receiving the at least one fastening element, which fastening element is guided displaceably and fixably in the longitudinal direction of the guiding slot (6) and is held immovably in the guiding slot (6) transversely to the longitudinal direction thereof.

## Revendications

1. Elément mural pouvant être végétalisé (1, 10, 113) qui est monté à partir de tronçons de barre profilée (2, 3, 9) reliés entre eux au moins sur une face visible de l'élément mural (1, 10, 113), et comporte au moins un composant mural (4) qui est maintenu sur au moins un des tronçons de barre profilée (2, 3) et a au moins une ouverture de plantation (17) traversant le composant mural (4), **caractérisé en ce qu'**au moins un des tronçons de barre profilée (2, 3) présente sur chacune de deux de ses faces longitudinales de barre profilée une rainure de réception (5) destinée à recevoir l'au moins un composant mural (4) ainsi qu'une rainure de guidage (6) pour recevoir au moins un élément de fixation, lequel élément de fixation est guidé de manière à pouvoir coulisser dans la direction longitudinale de la rainure de guidage (6) et à pouvoir être fixé et maintenu transversalement à la direction longitudinale de la rainure de guidage (6) de manière inamovible dans celle-ci, qu'il est prévu au moins un premier tronçon de barre profilée (2) qui présente sur chacune de deux de ses faces longitudinales de barre profilée disposées à angle droit l'une par rapport à l'autre une rainure de réception (5) et une rainure de guidage (6), qu'au moins un des composants muraux (4) est logé dans chacune des rainures de réception (5) de l'au moins un premier tronçon de barre profilée (2) et au moins un des éléments de fixation est prévu dans chacune des rainures de guidage (6) de l'au moins un premier tronçon de barre profilée (2), et que l'élément mural (1, 10) comporte des premiers tronçons de barre profilée (2) au moins dans chacune de ses zones d'angle orientées verticalement.

2. Elément mural selon la revendication 1, **caractérisé en ce qu'**il est prévu au moins un deuxième tronçon de barre profilée (3) qui présente sur chacune de deux de ses faces longitudinales de barre profilée opposées entre elles une rainure de réception (5) et une rainure de guidage (6), et que ces rainures de guidage (6) ainsi que ces rainures de réception (5) sont disposées dans des plans parallèles.

3. Elément mural selon la revendication 1 ou 2, **caractérisé en ce que** l'au moins un élément de fixation comporte un coulisseau ou une coulisse qui est guidé de manière coulissante dans une des rainures de guidage (6) de l'au moins un tronçon de barre profilée (2, 3).

4. Elément mural selon la revendication 3, **caractérisé en ce que** l'au moins un coulisseau / au moins un des coulisseaux comporte au moins un filetage intérieur dans lequel une section de filetage est vissée avec son filetage extérieur, laquelle section de filetage relie le tronçon de barre profilée avec un autre tronçon de barre profilée.

5. Elément mural selon une des revendications 1 à 4, **caractérisé en ce que** cet élément mural est configuré en forme de caisson ou de prisme.

6. Elément mural selon la revendication 5, **caractérisé en ce que** la forme de caisson ou de prisme de cet élément mural (1, 10) est segmentée par des deuxièmes tronçons de barre profilée (3).

7. Elément mural selon une des revendications 1 à 6, **caractérisé en ce que** cet élément mural (1, 10) porte au moins sur chacune de deux de ses faces opposées au moins un composant mural (4) présentant au moins une ouverture de plantation (17).

8. Elément mural selon une des revendications 1 à 7, **caractérisé en ce que** cet élément mural (1, 10) délimite un corps volumique dont l'espace intérieur de corps volumique est rempli de substrat végétal pour les plantes prévues pour la végétalisation.

9. Elément mural selon une des revendications 1 à 8, **caractérisé en ce que** cet élément mural (10) est prévu comme un élément mural posé au sol et que, pour cela, les extrémités frontales situées du côté du sol au moins des tronçons de barre profilée prévus dans les zones d'angle de cet élément mural (10) sont configurées comme des socles (11) de cet élément mural (10).

10. Elément mural selon une des revendications 1 à 9, **caractérisé en ce que** cet élément mural présente sur une face opposée à la face visible au moins un élément préfabriqué en béton sur lequel les tronçons de barre profilée (2, 3, 9) de cet élément mural (10) sont maintenus, et que cet élément préfabriqué en béton est configuré de préférence comme un appui en particulier posé au sol de cet élément mural.

11. Elément mural selon la revendication 10, **caractérisé en ce que** l'élément préfabriqué en béton est configuré comme un panneau mural en particulier en forme de L ou comme un bloc en L.

12. Elément mural selon une des revendications 1 à 11, **caractérisé en ce qu'**un élément de protection de trou de plantation (13) de préférence en forme de gobelet ou de manchon peut être inséré dans au moins une des ouvertures de plantation (17).

13. Elément mural selon la revendication 12, **caractérisé en ce que** l'au moins élément de protection de trou de plantation (13) est sans fond et présente au niveau de sa zone partielle périphérique du côté du fond (15) une extension longitudinale plus courte que dans la zone partielle périphérique opposée (16).

14. Elément mural selon la revendication 12 ou 13, **caractérisé en ce que** l'au moins un élément de protection de trou de plantation (13) est incliné au niveau de sa face frontale opposée à la face visible de cet élément mural.

15. Elément mural selon une des revendications 1 à 14, **caractérisé en ce que** les tronçons de barre profilée (2, 3, 9) voisins sont reliés entre eux par au moins une connexion filetée ou emboîtable.

16. Elément mural selon une des revendications précédentes, **caractérisé en ce que** les tronçons de barre profilée (2, 3, 9) de cet élément mural (1, 10) sont maintenus sur une façade d'un bâtiment.

17. Elément mural selon une des revendications 1 à 16, **caractérisé en ce que** l'au moins un composant mural (4) est plat et en particulier en forme de panneau.

18. Elément mural selon une des revendications 1 à 17, **caractérisé en ce que** l'au moins un composant mural (4) présente au moins dans une zone partielle un caillebotis à lamelles qui est constitué de groupes de lattes (18, 19) se croisant mutuellement parmi lesquels un premier groupe de lattes (18) parallèles espacées entre elles est orienté dans le sens vertical et parmi lesquels un deuxième groupe de lattes (19) parallèles espacées entre elles est orienté dans le sens horizontal, et que les ouvertures de plantation (17) sont délimitées chacune par des lattes horizontales et verticales (18, 19) voisines.

19. Elément mural selon la revendication 18, **caractérisé en ce que** les lattes orientées dans le sens horizontal (19) sont inclinées vers le haut du côté de la face extérieure de cet élément mural (113).

20. Elément mural selon la revendication 18 ou 19, **caractérisé en ce que** le caillebotis à lamelles prévu au moins dans une zone partielle de cet au moins un élément mural (113) est entouré par un cadre 20.

21. Elément mural selon une des revendications 18 à 20, **caractérisé en ce que** le bord longitudinal extérieur des lattes orientées dans le sens horizontal (19) fait saillie au-delà des lattes orientées dans le sens vertical (18).

22. Elément mural selon une des revendications 18 à 21, **caractérisé en ce que** le caillebotis à lamelles / les caillebotis à lamelles sont faits d'un matériau métallique ou non métallique.

23. Elément mural selon une des revendications 18 à 22, **caractérisé en ce que** le caillebotis à lamelles / les caillebotis à lamelles sont configurés comme des caillebotis pressés, que les lattes orientées dans le sens vertical (18) font office de lattes portantes et que les lattes configurées comme des lattes transversales et orientées dans le sens horizontal (19) sont insérées dans des encoches des lattes portantes (18).

24. Procédé de montage d'un élément mural pouvant être végétalisé (1, 10) selon une des revendications 1 à 23 sur un mur, **caractérisé en ce que** l'élément mural (1) comportant au moins un panneau sur deux de ses faces opposées est fixé sur le mur à distance de celui-ci, et que l'interstice situé entre l'au moins un panneau orienté vers le mur et le mur espacé de celui-ci est configuré et utilisé comme une ventilation par l'arrière.

25. Ensemble de montage d'un élément mural pouvant être végétalisé qui comporte des tronçons de barre profilée (2, 3, 9) pouvant être reliés entre eux, qui a au moins un composant mural avec au moins une ouverture de plantation (17) traversant ce composant mural (4), lequel (4) peut être monté sur au moins un des tronçons de barre profilée (2, 3), et qui comporte au moins un élément de fixation, **caractérisé en ce qu'**au moins un des tronçons de barre profilée (2, 3) présente sur chacune de deux de ses faces longitudinales de barre profilée une rainure de réception (5) destinée à recevoir l'au moins un composant mural (4) ainsi qu'une rainure de guidage (6) pour recevoir au moins un élément de fixation, lequel élément de fixation est guidé de manière à pouvoir coulisser dans la direction longitudinale de la rainure de guidage (6) et à pouvoir être fixé et maintenu transversalement à la direction longitudinale de la rainure de guidage (6) de manière inamovible dans celle-ci.
